# EUROPEAN PATENT SPECIFICATION

(11) **EP 2 955 548 B1**
(45) Date of publication and mention of the grant of the patent: **20.10.2021**
(21) Application number: 15171866.5
(22) Date of filing: 12.06.2015
(51) Int. Cl.: G01V 1/38, B63B 21/66, B65H 69/04, F16G 11/14

(54) **TOWED SEISMIC ARRANGEMENT COMPRISING A MULTI-SECTIONAL SEPARATION ROPE FOR STREAMERS AND METHOD FOR GENERATING SUCH TOWED SEISMIC ARRANGEMENT**
GESCHLEPPTE SEISMISCHE ANORDNUNG UMFASSEND EIN STREAMERTRENNSEILE MIT MEHREREN ABSCHNITTEN UND VERFAHREN ZUR HERSTELLUNG SOLCHER ANORDNUNG
AGENCEMENT SISMIQUE À REMORQUAGE COMPRENANT UNE CORDE DE SÉPARATION MULTI-SECTIONNELLE POUR STREAMERS ET PROCÉDÉ PERMETTANT DE GÉNÉRER UN TEL AGENCEMENT

(30) Priority: 13.06.2014 NO 20140743
(43) Date of publication of application: 16.12.2015
(73) Proprietor: Mørenot Offshore As, 6280 Søvik (NO)
(72) Inventor: Hurlen, Stig, 6270 Brattvåg (NO)
(74) Representative: Håmsø Patentbyrå AS

(56) References cited:
- EP-A2- 0 112 318
- WO-A1-2012/154054
- WO-A2-2010/009249
- Allen: "Soft Halyard or Line Shackle - SparTalk", , 30 November 2011 (2011-11-30), XP055551077, Retrieved from the Internet: URL:http://www.briontoss.com/spartalk/show thread.php?t=2178 [retrieved on 2019-02-04]

## Description

The invention relates to a towed seismic arrangement comprising a separation rope for adjacent streamers. The invention also relates to a method for generating a towed seismic arrangement.

In marine underground oil and gas exploration, seismic surveys are often carried out, wherein a seismic vessel tows towed-seismic streamers.

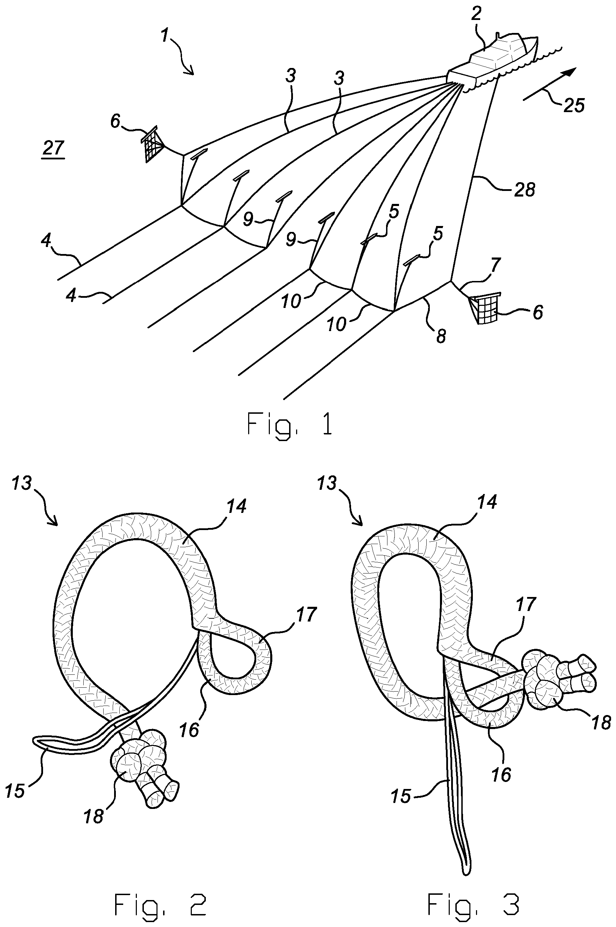

Figure 1 shows a seismic vessel 2 towing towed seismic 1 in the sea 27 in a towing direction 25 according to the prior art. The towed seismic comprises streamers 4 which may have a length of between 3 and 12 km. The streamers are provided with hydrophones and possibly other sensors, for example depth sensors. Seismic sources not shown, typically air guns, emit acoustic pulses which are reflected by the seabed and interfaces between underground strata of different compositions. The acoustic signals and their reflections are picked up by the hydrophones and recorded on a computer system for subsequent interpretation with a view to finding deposits of hydrocarbons.

Each streamer 4 is towed from the vessel 2 on a tow rope 3. The streamers normally have ballast trimmed to negative buoyancy and are prevented from sinking below a desired depth, which may be 10 m, by floats 5 that are connected to the streamers by connecting ropes 9. The streamers may have depth-control devices, so-called "birds" (not shown), keeping the streamers at the desired depth.

It is desirable for the streamers to have a predefined spacing, which may be from 25 to 200 m. The predefined interstreamer distance may vary between different seismic surveys. A deflector 6 on each side of the towed array is towed by the vessel 2 by means of a tow rope 28 and is connected to the outermost streamer of the towed array by connecting ropes 7 and 8. The deflector has a float which keeps it in the surface of the sea, and a vertical, slanted wing which goes into the sea and which, because of its movement through the sea, pulls the outermost streamer of the towed array outwards. The streamers are thereby kept apart.

Separation ropes 10 provide for the predefined distance between the streamers 4 not to be exceeded. The separation ropes may be specially adapted for the towed array in which they are going to be used, or they may be put together from shorter partial ropes.

In the prior-art joining of partial ropes to form the separation ropes, the partial ropes are connected with shackles, rings or other connections containing steel or other metals. The partial ropes may be attached with eyes that have grommets of steel to protect the ropes from the metal of the shackles or rings. Accordingly, the connections will be relatively large and heavy, and have a much greater negative buoyancy than the ropes, which are made from fibre. In consequence, the separation ropes may sag somewhat where the connections are, so that the streamers may be pulled somewhat towards each other, which is undesirable, of course. Another drawback may be that connections made of metal give the towed array increased negative buoyancy, which may need to be compensated for by other means. A further drawback of the large metal connections is that they offer high kinetic resistance in the water. However, the largest drawback of these metal connections is that, because the separation ropes and connections are moving all the time, they wear the fibre ropes, reducing their strength.

WO2010/009249 discloses a towed seismic arrangement comprising a separation rope determining the maximum distance between adjacent streamers. The rope is tied to the tow member by a knot or a shackle.

The invention has for its object to remedy or reduce at least one of the drawbacks of the prior art or at least provide a useful alternative to the prior art.

The object is achieved through the features which are specified in the description below and in the claims that follow.

The invention is defined by the independent claims. The dependent claims define advantageous embodiments of the invention.

In a first aspect, the invention relates more specifically to a towed seismic arrangement comprising a plurality of streamers and a separation rope for streamers in towed seismic, wherein the separation rope, determines a maximum interstreamer distance between the streamers, the separation rope consisting of two or more partial ropes. According to the invention, the partial ropes are connected with a rope shackle made of a rope.

Rope shackles are known, for example from sailing boats. But, to the best of the inventor's knowledge, the use of rope shackles to connect partial ropes that together form a separation rope for streamers in towed seismic is not known. For a more detailed explanation of rope shackles, reference is made to the detailed description of the invention.

The rope shackles are metal-free. Thereby low weight of the rope shackles is ensured, and the above-mentioned problems associated with heavy rope shackles are avoided. Further, wear on the fibre rope from metal components is avoided.

The partial ropes may preferably have eyes that are connected to the rope shackles. Such eyes may be formed from loops at the ends of the partial ropes and may be spliced into the partial ropes or be attached to the partial ropes in some other manner. The eyes may preferably be without grommets. The eyes and the rope shackles may thereby form slim connections, offering only little kinetic resistance in the water. The eyes may preferably be metal-free, so that they do not wear the fibre ropes down. Further, the partial ropes may preferably be of standardized lengths, chosen to be such that a number of joined partial ropes may together have a length equalling a typically desired length of the separation rope. An example may be that the separation ropes typically have desired lengths forming a multiple of 25 m, the separation ropes accordingly being typically 25 m, 50 m, 75 m, 100 m, 125 m and so on. The lengths of the partial ropes may then be standardized to, for example, 25 m, 50 m, 100 m, so that by combining partial ropes of different lengths, a separation rope of a typically desired length will be obtained. A rational stock-holding of partial ropes is thereby achieved.

The diameter of the rope of the rope shackles may be the same as, smaller or larger than the diameter of the separation ropes. Further, the strength of the rope of the rope shackles may be the same as, lower or higher than the strength of the separation ropes. In this way, the rope shackles may be interchangeable between different types of ropes that are used as separation ropes. To adapt the strength of the rope shackles to the strength of the separation ropes, the rope shackles may be single-threaded, double-threaded, or triple-threaded.

In a second aspect, the invention relates more specifically to a method for generating a towed seismic arrangement. According to the invention, the separation rope may be put together from two or more partial ropes which are joined with rope shackles made of a rope. The separation rope may preferably be put together from two or more partial ropes of standardized lengths, which together may have a length equalling a desired length of the separation rope. By the method according to the invention, the advantages mentioned above are achieved.

The invention is not limited to the type of towed seismic that is mentioned above, but may be used in towed seismic with any number of streamers and any configuration. In what follows, an example of a preferred embodiment is described, which is visualized in the accompanying drawings, in which:
Figure 1 shows prior-art towed seismic;
Figures 2-4 show a prior-art rope shackle;
Figure 5 shows part of towed seismic according to the invention; and
Figures 6-8 shows rope connections according to the invention.

Before the invention is explained in more detail, a rope shackle will be explained. Figure 2 shows an open rope shackle 13. A rope shackle is formed by bending a short rope, typically less than 1 m long, depending on the dimension, at the middle, so that a loop 17 is formed. The rope on one side of the loop is loosened, so that there is an opening in the middle. The end of the rope on the other side of the loop is threaded into and through the part that has been loosened. The part of the rope that has been loosened thereby forms a sheath 14, whereas the part that has been threaded inside forms a core 16. Before the core is threaded all the way in, a string 15 may be attached to the core. The core 16 is threaded all the way through and out of the sheath 14, so that the loop 17 is closed. A large knot 18 that locks the core and sheath together is made at the end of the rope opposite the loop 17.

The loop 17 is opened by pulling the sheath 14 away from the loop, so that the core 16 appears. This is done more easily by holding the sheath behind the loop and pulling on the string 15. However, the string 15 is not necessary and may be left out.

Figure 3 shows the rope shackle with the end of the rope with the knot 18 having been passed through the loop 17.

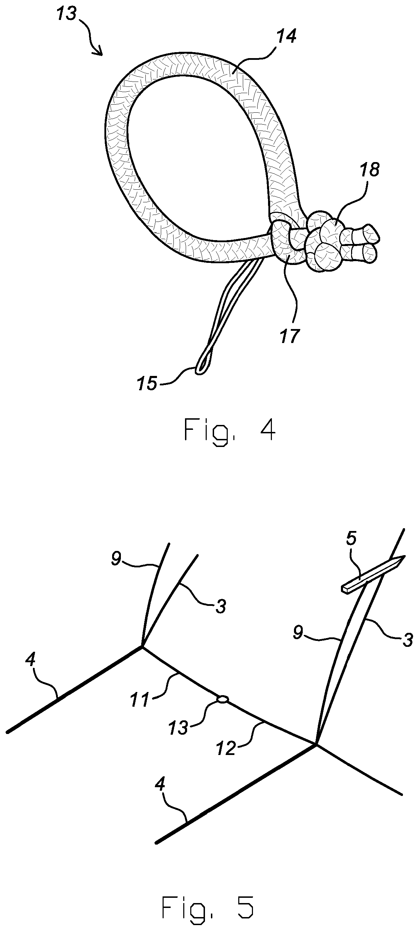

Figure 4 shows the rope shackle with the loop 17 having been tightened around the rope behind the knot 18. This tightening is done by stretching the sheath 14 and bringing it towards the knot 18, so that the core 16 enters the sheath 14. The rope shackle 13 is now closed.

Figure 5 shows part of towed seismic according to the invention. The streamers 4 are tied together by two partial ropes, a first partial rope 11 and a second partial rope 12, together forming a partial rope corresponding to the separation rope 10 in figure 1. The two partial ropes are connected with a rope shackle 13.

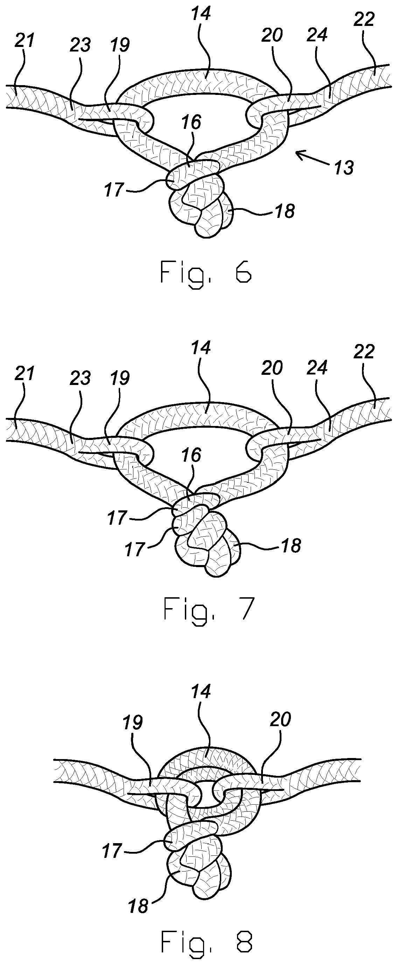

Figure 6 shows the rope shackle 13 closed. Eyes 19, 20 at ends 21, 22 of the first and second partial ropes 11, 12, respectively, have been fitted in the shackle. The eyes 19, 20 are formed at the ends 21, 22 by splices 23, 24 in a known manner. The eyes 19, 20 are fitted in the rope shackle by it being opened, as shown in figure 2, and threaded through the eyes, after which it is closed, as shown in figures 3, 4.

Figure 7 shows a connection between the partial ropes 11, 12 corresponding to that of figure 6, but the core 16 has been passed twice around the rope behind the knot 18. Thereby a more secure rope shackle than that of figure 6 is produced.

Figure 8 shows a connection between the partial ropes 11, 12 corresponding to that of figure 6, but the rope in the rope shackle has been threaded twice through the eyes 19, 20. A double-threaded rope shackle is thereby produced, having a greater strength than that in figure 6. The rope of the rope shackle may also have been threaded three times through the eyes 19, 20, so that a triple-threaded rope shackle is produced, having even greater strength.

It should be noted that all the above-mentioned embodiments illustrate the invention, but do not limit it, and persons skilled in the art may form many alternative embodiments without departing from the scope of the claims. In the claims, reference numbers in brackets are not to be regarded as restrictive. The use of the verb "to comprise" and its different forms does not exclude the presence of elements or steps which are not mentioned in the claims. The indefinite article "a" or "an" before an element does not exclude the presence of a plurality of such elements.

## Claims

1. A towed seismic arrangement (1) comprising a plurality of streamers (4) and a separation rope (10) connecting two adjacent streamers (4), the separation rope (10) determining a maximum interstreamer distance between the streamers (4), the separation rope (10) consisting of two or more partial ropes (11, 12), **characterized in that** the partial ropes (11, 12) are connected with a rope shackle (13) made of a rope.

2. The towed seismic arrangement (1) according to claim 1, wherein the partial ropes (11, 12) have eyes (19, 20) that are connected to the rope shackle (13).

3. The towed seismic arrangement (1) according to one of the preceding claims, wherein the partial ropes (11, 12) have standardized lengths, chosen to be such that a number of joined partial ropes (11, 12) together have a length equalling a typically desired length of the separation rope (10).

4. The towed seismic arrangement (1) according to one of the preceding claims, wherein the rope shackle (13) is single threaded, double-threaded or triple-threaded depending on the desired strength in the connection between the partial ropes (11, 12).

5. The towed seismic arrangement (1) according to one of the preceding claims, wherein a diameter of the rope of the rope shackle (13) is larger than a diameter of the partial ropes (11, 12).

6. A method for generating a towed seismic arrangement according to claim 1, **characterized in that** the separation rope (10) is put together from two or more partial ropes (11, 12) that are connected with a rope shackle (13) made of a rope.

7. The method according to claim 6, wherein the separation rope (10) is put together from two or more partial ropes (11, 12) of standardized lengths, together having a length equalling a desired length of the separation rope (10).

## Patentansprüche

1. Eine geschleppte seismische Anordnung (1), aufweisend eine Vielzahl von Messkabeln (4), und ein Trennungsseil (10), welches zwei benachbarte Messkabel (4) verbindet, wobei das Trennungsseil (10) einen maximalen Abstand zwischen den Messkabeln (4) bestimmt, wobei das Trennungsseil (10) aus zwei oder mehr Teilseilen (11, 12) besteht, **dadurch gekennzeichnet, dass** die Teilseile (11, 12) mittels eines Seilschäkels (13), welcher aus einem Seil gebildet ist, miteinander verbunden sind.

2. Geschleppte seismische Anordnung (1) gemäss Anspruch 1, wobei die Teilseile (11, 12) Ösen (19, 20) aufweisen, welche mit dem Seilschäkel (13) verbunden sind.

3. Geschleppte seismische Anordnung (1) gemäss einem der vorhergehenden Ansprüche, wobei die Teilseile (11, 12) standardisierte Längen aufweisen, welche derart ausgewählt sind, dass eine Anzahl der miteinander verbundenen Teilseile (11, 12) zusammen eine Länge aufweisen, welche einer typischerweise gewünschten Länge des Trennungsseils (10) entspricht.

4. Geschleppte seismische Anordnung (1) gemäss einem der vorhergehenden Ansprüche, wobei der Seilschäkel (13) einfachfädig, doppelfädig, oderdreifachfädig ist, abhängig von der gewünschten Stärke in der Verbindung zwischen den Teilseilen (11, 12).

5. Geschleppte seismische Anordnung (1) gemäss einem der vorhergehenden Ansprüche, wobei ein Durchmesser des Seils des Seilschäkels (13) grösser ist als ein Durchmesser der Teilseile (11, 12).

6. Verfahren zur Herstellung einer geschleppten seismischen Anordnung gemäss Anspruch 1, **dadurch gekennzeichnet, dass** das Trennungsseil (10) aus zwei oder mehr Teilseilen (11,12) zusammengesetzt ist, welche mittels eines aus einem Seil gebildeten Seilschäkels (13) verbunden sind.

7. Verfahren gemäss Anspruch 6, wobei das Trennungsseil (10) aus zwei oder mehr Teilseilen (11, 12) mit standardisierten Längen zusammengesetzt ist, wobei sie zusammen eine Länge aufweisen, welche einer gewünschten Länge des Trennungsseils (10) entspricht.

## Revendications

1. Un agencement sismique tracté (1) comprenant une pluralité de flûtes (4) et une corde de séparation (10) reliant deux flûtes (4) adjacentes, la corde de séparation (10) déterminant la distance maximale entre les flûtes (4), la corde de séparation (10) étant constituée de deux ou plusieurs cordes partielles (11, 12), **caractérisé en ce que** les cordes partielles (11, 12) sont reliées par des manilles de corde (13) faites de corde.

2. L'agencement sismique tracté (1) selon la revendication 1, dans lequel les cordes partielles (11, 12) ont des œillets (19, 20) qui sont reliés aux manilles de corde (13).

3. L'agencement sismique tracté (1) selon l'une des revendications précédentes, dans lequel les cordes partielles (11, 12) ont des longueurs normalisées, choisies telles qu'un certain nombre de cordes partielles reliées (11, 12) ont ensemble une longueur égale à une longueur typiquement souhaitée de la corde de séparation (10).

4. L'agencement sismique tracté (1) selon l'une des revendications précédentes, dans lequel les manilles de corde (13) sont à simple, double ou triple fil en fonction de la résistance souhaitée dans la liaison entre les cordes partielles (11, 12).

5. L'agencement sismique tracté (1) selon l'une des revendications précédentes, dans lequel le diamètre de la corde des manilles de corde (13) est plus grand qu'un diamètre des cordes partielles (11, 12).

6. Un procédé de génération d'un agencement sismique tracté (1) selon la revendication 1, **caractérisé en ce que** la corde de séparation est composée de deux ou plusieurs cordes partielles (11, 12) qui sont reliées par des manilles de corde (13) faites de corde (10).

7. Le procédé selon la revendication 6, dans lequel la corde de séparation (10) est assemblée à partir de de deux ou plusieurs cordes partielles (11, 12) de longueur normalisée, ayant ensemble une longueur égale à la longueur souhaitée de la corde de séparation (10).
